# EUROPEAN PATENT SPECIFICATION

(11) **EP 1 842 325 B1**
(45) Date of publication and mention of the grant of the patent: **15.03.2017**
(21) Application number: 06718284.0
(22) Date of filing: 13.01.2006
(51) Int. Cl.: H04L 12/10

(54) **ADJUSTING CURRENT LIMIT THRESHOLDS BASED ON OUTPUT VOLTAGE OF POWER SUPPLY DEVICE IN SYSTEM FOR PROVIDING POWER OVER COMMUNICATION LINK**
EINSTELLUNG VON STROMGRENZWERTSCHWELLEN AUF BASIS DER AUSGANGSSPANNUNG EINES NETZTEILS IN EINEM SYSTEM ZUR BEREITSTELLUNG VON LEISTUNG ÜBER EINE KOMMUNIKATIONSVERBINDUNG
RÉGLAGES DE SEUILS DE LIMITE D'INTENSITÉ EN FONCTION DE LA TENSION DE SORTIE DE DISPOSITIFS D'ALIMENTATION DANS UN SYSTÈME DE TRANSMISSION DE PUISSANCE VIA UNE LIAISON DE COMMUNICATION

(30) Priority: 25.01.2005 US 646509 P; 19.10.2005 US 252547
(43) Date of publication of application: 10.10.2007
(73) Proprietor: Linear Technology Corporation, Milpitas, CA 95035-7417 (US)
(72) Inventor: STANFORD, Clayton, Reynolds, Summerland, CA 93067-1210 (US); HEATH, Jeffrey, Lynn, Santa Barbara, CA 93105 (US); SU, Kirk, Tzukai, Santa Barbara, CA 93111 (US); KLEEBURG, Harry, Joseph, Goleta, CA 93117 (US)
(74) Representative: Müller-Boré & Partner Patentanwälte PartG mbB
(86) International application number: PCT/US2006/001193
(87) International publication number: WO 2006/081078

(56) References cited:
- "Power over Ethernet: Cisco Inline Power and IEEE 802.3af" CISCO SYSTEMS INC, 2004, XP002383688

## Description

This application claims priority of provisional U.S. patent application No. 60/646,509 filed on January 25, 2005, and entitled "SYSTEM AND METHOD FOR SUPPORTING ADVANCED POWER OVER ETHERNET SYSTEM."

### Technical Field

This disclosure relates to power supply systems, and more particularly, to circuitry and methodology for adjusting current limit thresholds based on an output voltage of a power supply device in a system for providing power over a communication link, such as a Power over Ethernet (PoE) system.

### Background Art

Over the years, Ethernet has become the most commonly used method for local area networking. The IEEE 802.3 group, the originator of the Ethernet standard, has developed an extension to the standard, known as IEEE 802.3af, that defines supplying power over Ethernet cabling. The IEEE 802.3af standard defines a Power over Ethernet (PoE) system that involves delivering power over unshielded twisted-pair wiring from a Power Sourcing Equipment (PSE) to a Powered Device (PD) located at opposite sides of a link. Traditionally, network devices such as IP phones, wireless LAN access points, personal computers and Web cameras, have required two connections: one to a LAN and another to a power supply system. The PoE system eliminates the need for additional outlets and wiring to supply power to network devices. Instead, power is supplied over Ethernet cabling used for data transmission.

As defined in the IEEE 802.3af standard, PSE and PD are non-data entities allowing network devices to supply and draw power using the same generic cabling as is used for data transmission. A PSE is the equipment electrically specified at the point of the physical connection to the cabling, that provides the power to a link. A PSE is typically associated with an Ethernet switch, router, hub or other network switching equipment or midspan device. A PD is a device that is either drawing power or requesting power. PDs may be associated with such devices as digital IP telephones, wireless network access points, PDA or notebook computer docking stations, cell phone chargers and HVAC thermostats.

The main functions of the PSE are to search the link for a PD requesting power, optionally classify the PD, supply power to the link if a PD is detected, monitor the power on the link, and disconnect power when it is no longer requested or required. A PD participates in the PD detection procedure by presenting a PoE detection signature defined by the IEEE 802.3af standard.

If the detection signature is valid, the PD has an option of presenting a classification signature to the PSE to indicate how much power it will draw when powered up. A PD may be classified as class 0 to class 4. A PD of class 1 requires that the PSE supplies at least 4.0W, a PD of class 2 requires that the PSE supplies at least 7.0W, and a PD of class 0, 3 or 4 requires at least 15.4W. Based on the determined class of the PD, the PSE applies the required power to the PD.

When power is supplied to the PD, the PSE monitors its output current with respect to certain current limit thresholds, such as the maximum output current of the PSE at a short circuit condition (I_{LIM}), and the overload current detection range (I_{CUT}). In particular, the PSE should be able to withstand, without damage, the application of short circuits of any wire to any other wire within a power supply cable, if the magnitude of the current through such a short circuit does not exceed I_{LIM}. Further, an overload condition may be detected when an output current of the PSE exceeds I_{CUT} for a time period exceeding an overload time limit (T_{ovld}). The PSE must remove power from a power interface when the overload condition is detected.

To comply with the IEEE 802.3af standard, a value of I_{LIM} must be maintained at a fixed level in the range between 400mA and 450mA, while a value of I_{CUT} must be kept at a fixed level which is more than P_{class}/V_{Port} but less than 400mA, where V_{Port} is an output voltage of the PSE, and P_{class} is power for a respective class. As defined in the IEEE 802.3af standard, a value of V_{Port} must be in the range between 44V and 57V.

A PSE may include multiple Ethernet ports provided to deliver power to multiple Ethernet devices coupled to the respective ports. Since a number of Ethernet devices do not need power delivered over the Ethernet, it is considered unlikely that all of the PSE's ports will be connected to a PD. Therefore, most of the PSEs are built with power capabilities much less than 15.4W multiplied by the number of ports. Thus, the PSE may perform power allocation to ensure that the total power requested by the ports is less than the power supply capability of the PSE.

As demonstrated below, a fixed level of the current limit threshold results in powering fewer ports. For example, at a 57V output voltage, a 350mA level of I_{CUT} means that an overload electronic circuit breaker opens at 57V x 350mA = 19.95W. At a 57V output voltage and a 400mA level of I_{CUT}, the overload circuit breaker will open at 57V x 400mA = 22.8W. As the overload electronic circuit breaker will not open until an output power reaches these levels, the PSE's power allocation system might assume that each of these ports will draw these amounts of power exceeding the maximum power required by the IEEE 802.3af standard.

Consequently, if a high output power is required by at least one of the ports, a PSE (which has a restricted power supply capability) can power a reduced number of ports because it might assume that each port will draw a high power. For example, a PSE with a 200W power supply, at V_{Port} = 57V and a 350mA level of I_{CUT} can power only 10 ports because it might assume that each port will consume up to 19.95W. If the output power is limited to 15.4W, the same PSE could power 200W/15.4W ≈ 13 ports.

Therefore, there is a need for a mechanism for adjusting current limit threshold levels to enable a PSE to deliver a maximum amount of power while powering a maximum number of ports.

Further, the IEEE 802.3af standard specifies an input current limit threshold in a PD. In particular, the standard limits an input inrush current I_{Inrush} in a PD to the 400mA maximum. However, it would be desirable to make the input current limit threshold adjustable to enable the PD to receive higher power.
"Power of Ethernet: Cisco Inline Power and IEEE 802.3af". CISCO SYSTEMS INC, 2004, discloses PSEs and PDs using the Cisco Discovery Protocol to negotiate their respective power requirements.

### Summary of the Disclosure

The objective of the invention is to provide an alternative improved power management for PoE applications. The objective is achieved by a system according to claim 1, a method according to claim 9 and a local area network according to claim 14. The further examples shall improve the understanding of the invention. The present disclosure offers a novel circuit and methodology for adjusting a current limit threshold level in a power supply system that provides power to a powered device (PD) over a communication link.

In accordance with one aspect of the disclosure, the power supply system has current limit circuitry for restricting a current based on a current limit threshold, and threshold circuitry for setting the current limit threshold in accordance with an output parameter of the system. In particular, an output current of the power supply system may be restricted based on an output current limit threshold and/or an input current of the PD may be restricted based on an input current limit threshold. The threshold circuitry may control the output current limit threshold and/or the input current limit threshold in accordance with an output voltage of the system so as to achieve a substantially constant output power of the system.

For example, the threshold circuitry may set a maximum output current of the system at a short circuit condition and/or an overload current detection range of the system in accordance with the output voltage of the system. Also, the threshold circuitry may set a maximum input current of the PD in accordance with the output voltage of the system.

In accordance with an embodiment of the disclosure, the current limit threshold may be made inversely proportional to the output voltage to achieve a constant output power of the system regardless of the output voltage.

Alternatively, the threshold circuitry may set the current limit threshold using approximation of a current- voltage curve representing a constant output power of the system. For example, a linear approximation of the current-voltage curve may be used to make the current limit threshold linearly proportional to the output voltage within a predetermined range of output voltages of the system.

The current limit circuit may control an output field-effect transistor or bipolar transistor of the system to prevent the output current of the system from exceeding the maximum output current of the system at a short circuit condition.

Further, the current limit circuit may cause the output transistor of the system to be turned off when the output current of the system exceeds the overload current detection range for a time period exceeding a predetermined time limit.

In accordance with a method of the present disclosure, the following steps are carried out:
- determining an output parameter of the power supply device, and
- adjusting a current limit threshold in accordance with the determined output parameter.

In particular, a maximum output current of the power supply device at a short circuit condition and/or a maximum overload current of the power supply device may be adjusted in accordance with an output voltage of the power supply device so as to achieve a substantially constant output power of the power supply device. Also, a maximum input current of the PD may be may be adjusted in accordance with an output voltage of the power supply device so as to achieve a substantially constant output power of the power supply device may be adjusted in accordance with an output voltage of the power supply device so as to achieve a substantially constant output power of the power supply device.

In accordance with another aspect of the disclosure, a system for providing power over the Ethernet includes a PSE having at least one port for supplying power to a powered device (PD), and a threshold circuit for controlling a current limit threshold in accordance with an output voltage produced at the port. In particular, the output current limit threshold of the PSE and/or the input current limit threshold of the PD may be controlled in accordance with the output voltage so as to achieve a substantially constant output power of the PSE.

In accordance with a further aspect of the disclosure, a local area network comprises at least a pair of network nodes, a network hub, and communication cabling for connecting the network nodes to the network hub to provide data communications. The network hub has a power supply device for providing power to a load over the communication cabling. The network includes current limit circuitry for restricting a current in a system for providing power over the communication cabling based on a current limit threshold, and threshold circuitry for setting the current limit threshold in accordance with an output parameter of the power supply device. The threshold circuitry may set an output current limit threshold of the power supply device and/or an input current limit threshold of the load in accordance with an output parameter of the power supply device.

Additional advantages and aspects of the disclosure will become readily apparent to those skilled in the art from the following detailed description, wherein embodiments of the present disclosure are shown and described, simply by way of illustration of the best mode contemplated for practicing the present disclosure. As will be described, the disclosure is capable of other and different embodiments, and its several details are susceptible of modification in various obvious respects, all without departing from the spirit of the disclosure. Accordingly, the drawings and description are to be regarded as illustrative in nature, and not as limitative.

### Brief Description of the Drawings

The following detailed description of the embodiments of the present disclosure can best be understood when read in conjunction with the following drawings, in which the features are not necessarily drawn to scale but rather are drawn as to best illustrate the pertinent features, wherein:
FIG. 1 is block-diagram illustrating a multi-port PSE in a PoE system in accordance with the present disclosure.
FIG. 2 is a diagram illustrating a current limit threshold control mechanism of the present disclosure.
FIG. 3 is a diagram illustrating a current-voltage curve representing a substantially constant level of an output power delivered to a port of the PSE.

### Detailed Disclosure of the Embodiments

The present disclosure will be made using the example of adjusting values of a current limit threshold, such as the maximum output current of the PSE at a short circuit condition (I_{LIM}), and/or the overload current detection range (I_{CUT}), in a Power over Ethernet (PoE) system. It will become apparent, however, that the concepts described herein are applicable to any network. For example, the system of the present disclosure may be provided in a local area network (LAN) having a plurality of nodes, a network hub and communication cabling connecting the nodes to the network hub for providing data communications. The network hub may include a power supply device, and the communication cabling may be utilized for supplying power from the power supply device to a load.

Moreover, as one skilled in the art would realize, the concept of the present disclosure may be utilized for adjusting a value of the maximum input current of the load, such as a PD.

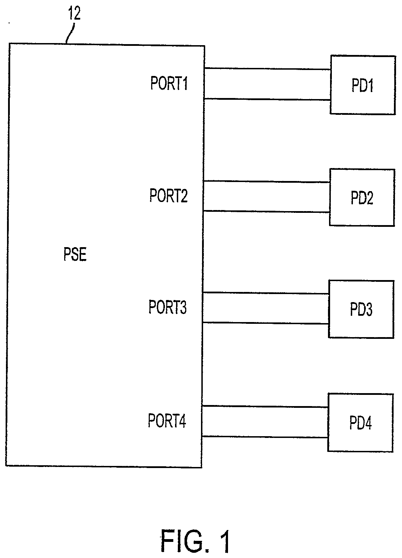

FIG. 1 shows a simplified block-diagram illustrating a Power over Ethernet (PoE) system 10 including Power Sourcing Equipment (PSE) 12 having multiple ports 1 to 4 respectively connectable to Powered Devices (PD) 1 to 4 via respective links, each of which may be provided using 2 or 4 sets of twisted pairs within the Ethernet cable. Although FIG. 1 shows four ports of the PSE 12, one skilled in the art would realize that any number of ports may be provided.

The PSE 12 may interact with each PD in accordance with the IEEE 802.3af standard. In particular, the PSE 12 and the PD participate in the PD detection procedure, during which the PSE 12 probes a link to detect the PD. If the PD is detected, the PSE 12 checks the PD detection signature to determine whether it is valid or non-valid. The valid and non-valid detection signatures are defined in the IEEE 802.3af standard. While the valid PD detection signature indicates that the PD is in a state where it will accept power, the non-valid PD detection signature indicates that the PD is in a state where it will not accept power.

If the signature is valid, the PD has an option of presenting a classification signature to the PSE to indicate how much power it will draw when powered up. A PD may be classified as class 0 to class 4. A PD of class 1 requires that the PSE supplies at least 4.0W, a PD of class 2 requires that the PSE supplies at least 7.0W, and a PD of class 0, 3 or 4 requires at least 15.4W. Based on the determined class of the PD, the PSE applies the required power to the PD.

A multi-port PSE device that supplies power to multiple links typically uses a single power supply to convert AC line power to the 802.3 af compliant power that can be sent over the link. Since a number of Ethernet devices connected to the ports of the PSE do not need power delivered over the Ethernet, it is considered unlikely that all of the PSE's ports will be requested to supply power. Therefore, a typical PSE device is built with a power supply capability much less than 15.4W multiplied by the number of ports. Hence, there may be a competition for power among the links powered by the PSE. For example, if a 4-port PSE device is already powering 3 PDs of class 2, it must allocate 21 W for powering the respective 3 links. If the PSE device detects a PD on its last port, it must ensure that it has the capabilities to power that PD. For example, if a PSE device operates with a 25W power supply, it has only 4W left. Therefore, it cannot provide power to the fourth PD of class 2. However, a PSE device with a 30W power supply can power the fourth PD of class 2 because it has 9W left.

This example shows that a multi-port PSE must keep account of the power demands from the links to compare the power demands with the capabilities of its power supply before powering a link. Therefore, the PSE 12 is provided with a power management mechanism that performs power allocation to ensure that the total power requested by the ports is less than the power supply capability of the PSE.

Moreover, the IEEE 802.3af standard requires a PSE to be able to withstand, without damage, the application of short circuits of any wire to any other wire within a power supply cable, if the magnitude of the current through such a short circuit does not exceed current I_{LIM} referred to as a maximum output current of the PSE at a short circuit condition.

In addition, the IEEE 802.3af standard requires a PSE to remove power from a power interface when an overload condition is detected. In particular, the overload condition may be detected when an output current of the PSE exceeds current I_{CUT} (referred to as an overload current detection range) for a time period exceeding a predetermined time interval such as an overload time limit (T_{ovld}).

In a conventional IEEE 802.3af-compliant PSE, a value of I_{LIM} must be maintained at a fixed level in the range between 400mA and 450mA, while a value of I_{CUT} must be kept at a fixed level which is more than P_{class}/V_{Port} but less than 400mA, where V_{Port} is an output voltage at a port of the PSE, and P_{class} is power for a respective class. As defined in the IEEE 802.3af standard, a value of V_{Port} must be in the range between 44V and 57V.

Thus, a typical IEEE 802.3af-compliant PSE would guarantee a 15.4W output power at an output voltage in the range between 44V and 57V. Therefore, its overload current detection range I_{CUT} would be between 15.4W/44V and 400mA, i.e. between 350mA and 400mA. Accordingly, a typical conventional PSE is designed with an overload electronic circuit breaker able to remove power when an output current exceeds an I_{CUT} level of 375±25mA.

However, a fixed level of the current limit threshold limits the PSE to powering fewer ports. For example, at a 57V output voltage, a 350mA level of I_{CUT} means that the overload electronic circuit breaker opens at 57V x 350mA = 19.95W. At a 57V output voltage and a 400mA level of I_{CUT}, the overload circuit breaker will open at 57V x 400mA = 22.8W. As the overload electronic circuit breaker will not open until an output power reaches these levels, the PSE's power allocation system might assume that each of these ports will draw these amounts of power exceeding the maximum power required by the IEEE 802.3af standard.

Consequently, if a high output power is required by at least one of the ports, a PSE having a restricted power supply capability can power a reduced number of ports because it might assume that each port will draw a high power. For example, a PSE with a 200W power supply and a 350mA level of I_{CUT} can power only 10 ports because it might assume that each port will consume up to 19.95W. If the output power is limited to 15.4W, the same PSE could power 200W/15.4W ≈ 13 ports.

To provide a maximum amount of power to a maximum number of ports, the PSE 12 of the present disclosure has a current limit threshold control mechanism that controls a current limit threshold in accordance with an output voltage V_{Port} so as to achieve a nearly constant output power within a predetermined range of the output voltages.

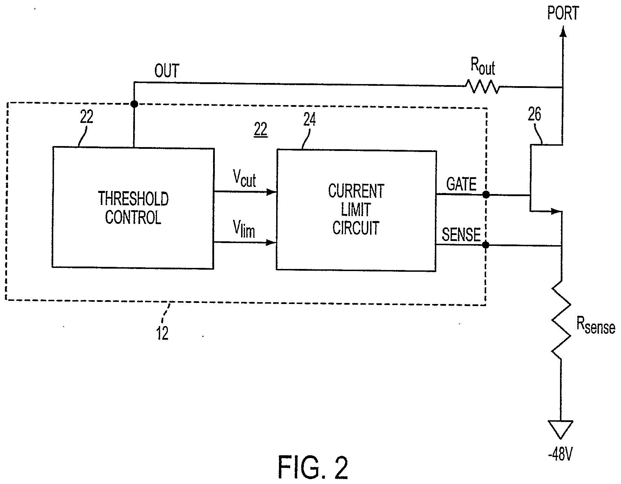

As shown in FIG. 2, a current limit threshold control mechanism 20 of the present disclosure comprises a threshold control circuit 22 for setting a current limit threshold in accordance with an output voltage V_{Port}, and a current limit circuit 24 that responds to overcurrent events, such as a short-circuit condition and an overload condition, based on the current limit threshold set by the threshold control circuit. In particular, the current limit circuit 24 monitors output current of the PSE 12 to keep the current at or below I_{LIM}. Also, the current limit circuit 22 indicates when the output current of the PSE 12 exceeds I_{CUT} for a time period exceeding a predetermined time interval to enable the PSE 12 to remove power supplied to the PD. The threshold control circuit 22 and the current limit circuit 24 may be provided on the PSE chip for each port of the PSE 12.

In particular, the threshold control circuit 22 may monitor an output voltage V_{Port} using an output voltage monitor terminal OUT of the respective port. The OUT terminal may be connected to the port through a resistor Rout. Based on a determined value of V_{Port}, the threshold control circuit 22 sets a current limit threshold value I_{T} as a function of the V_{Port} value. In particular, the current limit threshold value I_{T} may be a maximum current at a short-circuit condition I_{LIM}, or an overload current detection range I_{CUT}.

For example, the threshold control circuit 22 may make the current limit threshold I_{T} inversely proportional to the output voltage V_{Port}, i.e. I_{T} = P_{T}/V_{Port}, where P_{T} is a threshold power level at which an overcurrent event is detected. Since output power P_{Port} = I_{T} x V_{Port} = P_{T}, the current limit circuit 24 will detect an overcurrent event at a constant value of output power P_{Port} of the PSE 12. As a result, the PSE 12 may produce output power P_{Port} at a substantially constant level independent of changes in the output voltage V_{Port}. One skilled in the art would realize that various analog or digital circuits may be used to produce the current limit threshold I_{T} inversely proportional to the output voltage V_{Port}. Also, a computer device may be programmed to implement this function.

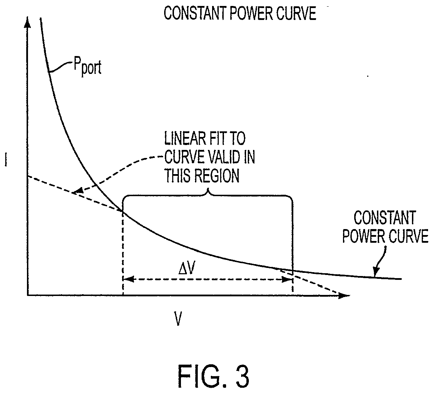

Alternatively, the threshold control circuit 22 may set a value of the current limit threshold I_{T} using a linear or other approximation of a current-voltage (I-V) curve representing a constant level of output power P_{Port}. For example, as illustrated in FIG. 3, in a limited predetermined range of output voltages ΔV, the I-V curve representing a constant power level P_{Port} may be linearly approximated. The ΔV range may correspond to the output voltage P_{Port} range between 44V and 57V required by the IEEE 802.3af standard. Hence, in the predetermined range ΔV of output voltages V_{Port}, the threshold control circuit 22 may perform a linear approximation of an I-V curve representing a constant level of output power P_{Port} to make the current limit threshold I_{T} linearly proportional to the output voltage V_{Port}. As a result, a substantially constant level of P_{Port} may be achieved in the predetermined range of output voltages V_{Port}.

Delivery of power to a port of the PSE 12 may be provided by controlling an output transistor of the PSE, for example, by controlling the gate drive voltage of an external power MOSFET 26 using a terminal Gate corresponding to the respective port. For example, the MOSFET 26 may couple -48V input supply to the PSE port in a controlled manner to provide a sufficient power P_{Port}. The current limit circuit 24 monitors the output current of the port via a terminal Sense corresponding to the respective port by monitoring voltage Vsense across sense resistor Rsense coupled to the MOSFET 26.

The threshold control circuit 22 supplies the current limit circuit 24 with the threshold voltage V_{LIM}, which may be determined as I_{LM} x Rs based on the I_{LIM} value determined by the threshold control circuit 22. As discussed above, the I_{LIM} value is determined in accordance with the output voltage V_{Port}. The current limit circuit 24 may control the gate voltage of the MOSFET 26 to reduce the output current of the PSE when the monitored, voltage Vsense exceeds the threshold voltage V_{LIM}. For example, the current limit circuit 24 may contain an operational amplifier that compares the threshold voltage V_{LIM} with the sense voltage Vsense to produce an output voltage that reduced the gate voltage of the MOSFET 26 when the voltage Vsense exceeds the threshold voltage V_{LIM}. As a result, the output current of the PSE 12 is maintained at or below the I_{LIM} level.

Further, the threshold control circuit 22 may provide the current limit circuit 24 with the threshold voltage V_{CUT}, which may be determined as I_{CUT} x Rs based on the I_{CUT} value determined by the threshold control circuit 22. As discussed above, the I_{CUT} value is determined in accordance with the output voltage V_{Port}. The current limit circuit 24 may indicate when the monitored voltage Vsense exceeds the threshold voltage V_{CUT} for a time period exceeding a predetermined time interval, in order to remove the power from the port. In particular, the current limit circuit 24 may have an overload timer activated when the sense voltage Vsense exceeds the threshold voltage V_{CUT}. If the sense voltage Vsense is still above the V_{CUT} level when an overload time limit defined by the timer expires, the MOSFET 26 will be turned off to remove the power from the port. For example, the overload time limit may be in the range between 50ms and 75ms to comply with the IEEE 802.3af standard.

Hence, the current limit threshold control mechanism of the present disclosure adjusts I_{LIM} and/or I_{CUT} threshold values in accordance with an output voltage V_{Port} to provide an output power P_{Port} at a substantially constant level independent of changes in an output voltage V_{Port}. As a result, a maximum amount of power may be delivered to a maximum number of PSE ports.

Further, the IEEE 802.3af standard limits an input inrush current I_{Inrush} in a PD to the 400mA maximum. In addition to controlling the output current limit threshold in the PSE or instead of controlling the output current limit threshold, the current limit threshold control mechanism of the present disclosure may be utilized for adjusting the input current limit threshold in the PD in accordance with the output voltage of the PSE.

For example, a PD may include an input current limit circuit that compares an input current of the PD with an input current threshold to limit the input current to the maximum value set by the input current threshold. The input current threshold may be adjusted in accordance with the output voltage of the PSE in a manner discussed above in connection with adjusting the output current limit thresholds in the PSE. In particular, the PD may be enabled to operate with a higher input current when the PD requires a higher power.

The foregoing description illustrates and describes aspects of the present invention. Additionally, the disclosure shows and describes only preferred embodiments, but as aforementioned, it is to be understood that the invention is capable of use in various other combinations, modifications, and environments and is capable of changes or modifications within the scope of the inventive concept as expressed herein, commensurate with the above teachings, and/or the skill or knowledge of the relevant art. For example, instead of adjusting I_{LIM} and/or I_{CUT} threshold values, the current limit threshold control mechanism of the present disclosure may provide adjustment of other threshold levels of a PSE and/or a PD in accordance with an output signal of the PSE.

The embodiments described hereinabove are further intended to explain best modes known of practicing the invention and to enable others skilled in the art to utilize the invention in such, or other, embodiments and with the various modifications required by the particular applications or uses of the invention.

Accordingly, the description is not intended to limit the invention to the form disclosed herein. Also, it is intended that the appended claims be construed to include alternative embodiments.

## Claims

1. A system (FIG. 2) for providing power to a powered device (FIG.1, PD1), PD, over a communication link, comprising:
current limit circuitry (24) adapted to be responsive to an overcurrent event for restricting an output current, the current limit circuitry being configured to restrict the output current to be at most equal to a current limit threshold, and
threshold circuitry (22) adapted to set the current limit threshold in accordance with an output voltage of the system to produce a substantially constant output power of the system independent of changes in the output voltage while powering the PD.

2. The system of claim 1, wherein the overcurrent event is a short circuit condition at the output of the system.

3. The system of claim 1, wherein the threshold circuitry is configured to set an overload current detection range of the system in accordance with the output voltage.

4. The system of claim 1, wherein the threshold circuitry (22) is configured to make the current limit threshold inversely proportional to the output voltage.

5. The system of claim 1, wherein the threshold circuitry (22) is configured to set the current limit threshold using an approximation of a current-voltage curve representing a substantially constant output power of the system.

6. The system of claim 5, wherein the threshold circuitry (22) is configured to use a linear approximation of the current-voltage curve within a predetermined range of output voltages of the system.

7. The system of claim 2, wherein the current limit circuit (24) is configured for controlling an output transistor (26) of the system to prevent the output current from exceeding the maximum output current of the system upon a short circuit condition at the output of the system.

8. The system of claim 1, wherein the system is adapted in such a way that power to the powered device, PD, is supplied over the Ethernet.

9. A method of controlling a power supply device (FIG. 2) for supplying power to a powered device (FIG. 1, PD1), PD, over a communication link, the method comprising the steps of:
in response to an overcurrent event, restricting an output current to be at most equal to a current limit threshold; and
adjusting the current limit threshold in accordance with an output voltage of the power supply device (FIG. 2) to produce a substantially constant power of the power supply device independent of changes in the output voltage while powering the PD.

10. The method of claim 9, wherein the over current event is a short circuit condition at the output of the power supply device.

11. The method of claim 9, wherein the current limit threshold is made inversely proportional to the output voltage.

12. The method of claim 9, wherein the current limit threshold is set using an approximation of a current-voltage curve representing a substantially constant output power of the power supply device.

13. The method of claim 12, wherein the current limit threshold is set using a linear approximation of the current-voltage curve within a predetermined range of output voltages of the power supply device.

14. A local area network comprising:
at least a pair of network nodes (FIG.1, PD1 and PD2),
a network hub (12), and
communication cabling (FIG.1) for connecting the network nodes to the network hub to provide data communications,
the network hub having the system of claim 1.

## Patentansprüche

1. Ein System (Abb. 2) um Energie für ein energiegetriebenes Gerät (Abb. 1, PD1), PD, über eine Kommunikationsverbindung bereitzustellen, umfassend:
Strombegrenzungsschaltung (24) adaptiert, um in Antwort auf ein Überstromereignis den Ausgangsstrom zu begrenzen, die Strombegrenzungsschaltung ist konfiguriert, um den Ausgangsstrom zu begrenzen, um höchstens gleich einem Stromlimitgrenzwert zu sein und
Grenzwertschaltung (22) adaptiert, um den Stromlimitgrenzwert in Übereinstimmung mit einer Ausgangsspannung des Systems zu setzen, um eine im Wesentlichen konstante Ausgangsenergie des Systems, unabhängig von der Änderung der Ausgangsspannung während des Ladens des PD, zu produzieren.

2. Das System nach Anspruch 1, wobei das Überstromereignis ein Kurzschlusszustand am Ausgang des Systems ist.

3. Das System nach Anspruch 1, wobei die Grenzwertschaltung konfiguriert ist, um den Erfassungsbereich des Überstroms in Übereinstimmung mit dem Ausgangsstrom festzulegen.

4. Das System nach Anspruch 1, wobei die Grenzwertschaltung (22) konfiguriert ist, um den Stromlimitgrenzwert umgekehrt proportional zur Ausgangsspannung zu machen.

5. Das System nach Anspruch 1, wobei die Grenzwertschaltung (22) konfiguriert ist, um mit einer Approximation einer Strom-Spannungskennlinie, welche eine im Wesentlichen konstante Ausgangsenergie des Systems repräsentiert, den Stromlimitgrenzwert festzulegen.

6. Das System nach Anspruch 5, wobei die Grenzwertschaltung (22) konfiguriert ist, um eine lineare Approximation der Strom-Spannungskennlinie in einem festgelegten Bereich des Ausgangsstroms des Systems zu verwenden.

7. Das System nach Anspruch 2, wobei die Strombegrenzungsschaltung (24) konfiguriert ist, um einen Ausgangstransistor des Systems zu kontrollieren um zu verhindern, dass der Ausgangsstrom bei einem Kurzschlusszustand am Ausgang des Systems den maximalen Ausgangsstrom des Systems übersteigt.

8. Das System nach Anspruch 1, wobei das System auf eine Weise adaptiert ist, dass die Energie zum energiegetriebenen Gerät, PD, über Ethernet bereitgestellt wird.

9. Eine Methode zur Kontrolle eines Energieversorgungsgeräts (Abb. 2) um einem energiegetriebenen Gerät (Abb. 1, PD1), PD, Energie über eine Kommunikationsverbindung bereitzustellen, die Methode umfassend folgende Schritte:
in Antwort auf ein Überstromereignis, beschränken eines Ausgangsstroms, um höchstens gleich einem Stromlimitgrenzwerts zu sein, und
anpassen des Stromlimitgrenzwerts in Übereinstimmung mit einer Ausgangsspannung des Energieversorgungsgeräts (Abb. 2), um eine im Wesentlichen konstanten Ausgangsenergie des Energieversorgungsgeräts unabhängig von Änderungen in der Ausgangsspannung während des Ladens des PD zu produzieren.

10. Die Methode nach Anspruch 9, wobei ein Überstromvorfall ein Kurzschlusszustand am Ausgang des Energieversorgungsgeräts ist.

11. Die Methode nach Anspruch 9, wobei der Stromlimitgrenzwert umgekehrt proportional zur Ausgangsspannung gemacht ist.

12. Die Methode nach Anspruch 9, wobei der Stromlimitgrenzwert unter Verwendung einer Approximation einer Strom-Spannungskennlinie, welche eine im Wesentlichen konstante Ausgangsenergie des Energieversorgungsgeräts repräsentiert, festgelegt wird.

13. Die Methode nach Anspruch 12, wobei der Stromlimitgrenzwert unter Verwendung einer linearen Approximation einer Strom-Spannungskennlinie, innerhalb eines festgelegten Bereichs der Ausgangsspannung des Energieversorgungsgeräts, festgelegt wird.

14. Ein lokales Gebiets-Netzwerk umfassend:
zumindest ein Paar Netzwerkknoten (Abb. 1, PD1 und PD2),
ein Netzwerk-Hub(Englisch: Hub, 12) und
Kommunikationsverkabelung (Abb. 1) um die Netzwerkknoten mit dem Netzwerk-Hub zu verbinden um Datenkommunikationen bereitzustellen, wobei
der Netzwerk-Hub das System nach Anspruch 1 hat.

## Revendications

1. Système (FIG.2) pour fournir une alimentation à un dispositif alimenté PD (FIG.1, PD1) via une liaison de communication, comprenant :
un circuit de limite d'intensité (24) adapté pour répondre à un événement de surintensité afin de restreindre une intensité de sortie, le circuit de limite d'intensité étant configuré pour restreindre l'intensité de sortie afin qu'elle soit au plus égal à un seuil limite d'intensité, et
un circuit de seuil (22) adapté pour régler le seuil de limite d'intensité conformément à une tension de sortie du système pour produire une puissance de sortie du système substantiellement constante indépendamment de variations de la tension de sortie pendant l'alimentation du PD.

2. Système selon la revendication 1, dans lequel l'événement de surintensité est une condition de court-circuit à la sortie du système.

3. Système selon la revendication 1, dans lequel le circuit de seuil est configuré pour régler une plage de détection de courant de surintensité du système conformément à la tension de sortie.

4. Système selon la revendication 1, dans lequel le circuit de seuil (22) est configuré pour rendre le seuil de limite d'intensité inversement proportionnel à la tension de sortie.

5. Système selon la revendication 1, dans lequel le circuit de seuil (22) est configuré pour régler le seuil de limite d'intensité en utilisant une approximation d'une courbe intensité-tension représentant une puissance de sortie substantiellement constante du système.

6. Système selon la revendication 5, dans lequel le circuit de seuil (22) est configuré pour utiliser une approximation linéaire de la courbe intensité-tension dans une plage prédéterminée de tensions de sortie du système.

7. Système selon la revendication 2, dans lequel le circuit de limite d'intensité (24) est configuré pour contrôler un transistor de sortie (26) du système pour éviter que l'intensité de sortie dépasse l'intensité de sortie maximale du système lors d'une condition de court-circuit à la sortie du système.

8. Système selon la revendication 1, dans lequel le système est adapté de telle sorte que l'alimentation du dispositif alimenté, PD, est fournie via Ethernet.

9. Procédé de contrôle d'un dispositif d'alimentation électrique (FIG.2) pour alimenter un dispositif alimenté PD (FIG.1, PD1) via une liaison de communication, le procédé comprenant les étapes suivantes :
en réponse à un événement de surintensité, restriction d'une intensité de sortie pour qu'elle soit au plus égal à un seuil de limite d'intensité ; et
ajustement du seuil de limite d'intensité conformément à une tension de sortie du dispositif d'alimentation électrique (FIG.2) pour produire une puissance substantiellement constante du dispositif d'alimentation électrique indépendamment de variations de la tension de sortie pendant l'alimentation du PD.

10. Procédé selon la revendication 9, dans lequel l'événement de surintensité est une condition de court-circuit à la sortie du dispositif d'alimentation électrique.

11. Procédé selon la revendication 9, dans lequel le seuil de limite d'intensité est rendu inversement proportionnel à la tension de sortie.

12. Procédé selon la revendication 9, dans lequel le seuil de limite d'intensité est réglé en utilisant une approximation d'une courbe intensité-tension représentant une puissance de sortie substantiellement constante du dispositif d'alimentation électrique.

13. Procédé selon la revendication 12, dans lequel le seuil de limite d'intensité est réglé en utilisant une approximation linéaire de la courbe intensité-tension dans une plage prédéterminée de tensions de sortie du dispositif d'alimentation électrique.

14. Réseau local comprenant :
au moins une paire de noeuds de réseau (FIG.1, PD1 et PD2),
un concentrateur de réseau (12), et
un câblage de communication (FIG.1) pour connecter les noeuds de réseau au concentrateur de réseau afin de fournir des communications de données,
le concentrateur de réseau comportant le système selon la revendication 1.
